# EUROPÄISCHE PATENTSCHRIFT

(11) **EP 2 533 994 B1**
(45) Veröffentlichungstag und Bekanntmachung des Hinweises auf die Patenterteilung: **01.04.2015**
(21) Anmeldenummer: 11703871.1
(22) Anmeldetag: 14.02.2011
(51) Int. Cl.: B60K 7/00, B60K 17/04, F16H 59/40, F16H 57/08

(54) **RADNABENANTRIEB FÜR KRAFTFAHRZEUGE**
WHEEL HUB DRIVE FOR MOTOR VEHICLE
ENTRAINEMENT DE MOYEU DE ROUE POUR VÉHICULE AUTOMOBILE

(30) Priorität: 12.02.2010 DE 102010007758
(43) Veröffentlichungstag der Anmeldung: 19.12.2012
(73) Patentinhaber: Magna Powertrain AG & Co. KG, 8502 Lannach (AT)
(72) Erfinder: EBNER, Philipp, A-8010 Graz (AT)
(74) Vertreter: Rausch, Gabriele
(86) Internationale Anmeldenummer: PCT/EP2011/052121
(87) Internationale Veröffentlichungsnummer: WO 2011/098594

(56) Entgegenhaltungen:
- EP-A2- 1 354 747
- WO-A1-02/072380

## Beschreibung

Die vorliegende Erfindung betrifft einen Radnabenantrieb für Kraftfahrzeuge.

Bei herkömmlichen Kraftfahrzeugen befindet sich eine Antriebseinheit in der Regel vorne oder hinten in der Fahrzeugmitte. Das von der Antriebseinheit erzeugte Drehmoment wird über Gelenkwellen auf angetriebene Räder des Kraftfahrzeugs übertragen. Ein solcher Antriebsstrang beansprucht erheblichen Bauraum, der für andere Komponenten des Kraftfahrzeugs nicht nutzbar ist.

Radnabenantriebe stellen eine kompakte Antriebsalternative dar. Jedem angetriebenen Rad ist ein eigener Antrieb zugeordnet, der sich im Bereich der Radnabe befindet. Aufwändige Komponenten zur Übertragung des Antriebsdrehmoments einer Antriebseinheit auf die angetriebenen Räder entfallen daher. Der nicht mehr benötigte Bauraum kann durch andere Fahrzeugkomponenten genutzt werden. Bei Elektro- oder Hybridfahrzeugen kann beispielsweise eine Batterie in dem frei gewordenen Bereich angeordnet werden.

Die Radnabenantriebe sind üblicherweise nahe an den Radlagern angeordnet. In bestimmten Fällen können die Radlager sogar in die ihnen zugeordneten Radnabenantriebe integriert sein. Dies hat zur Folge, dass der im Bereich des Radlagers zur Verfügung stehende Bauraum knapp bemessen ist. Baueinheiten, die üblicherweise in dem Radlagerbereich angeordnet sind, müssen daher anders positioniert oder gar umgestaltet werden. Beispielsweise können bisher verwendete Drehzahlsensoren (z.B. für ABS-Systeme) nicht ohne weiteres - wie bei üblichen Antrieben gängige Praxis - direkt hinter dem Radlager angeordnet werden.

Derartige Radnabenantriebe mit Drehzahlsensoren sind beispielsweise aus der gattungsbildenden WO 02/072380 A1 und der EP 1 354 747 A2 bekannt.

Es ist daher eine Aufgabe der vorliegenden Erfindung, einen Radnabenantrieb zu schaffen, der eine bauraumoptimierte Lösung für die vorstehend diskutierten Problematik bereitstellt.

Die vorstehend genannte Aufgabe wird durch einen Radnabenantrieb mit den Merkmalen des Anspruchs 1 gelöst.

Der erfindungsgemäße Radnabenantrieb für ein Kraftfahrzeug weist einen Motor, insbesondere einen Elektromotor auf, der mit einem Eingangselement eines Getriebes antriebswirksam verbunden ist. Das Getriebe weist ein Ausgangselement auf, das mit einem Wellenabschnitt verbunden ist, durch den ein Rad des Kraftfahrzeugs antreibbar ist. Zur Drehzahlüberwachung des Antriebs ist ein Sensor vorgesehen, der ein drehfest angeordnetes Sensorelement und ein drehbares Sensorelement umfasst. Das drehbare Sensorelement ist drehfest mit dem Ausgangselement verbunden.

Mit anderen Worten macht die erfindungsgemäße Lösung von der Tatsache Gebrauch, dass sich das Ausgangselement eines Getriebes, das zwischen dem Drehmoment erzeugenden Motor und einem angetriebenen Rad angeordnet ist, mit der gleichen Drehzahl wie das angetriebene Rad dreht. Der Sensor misst somit die Drehzahl des Rades nicht direkt im Bereich des Radlagers, sondern ist dem Ausgangselement des Getriebes zugeordnet. Dadurch kann die Einheit aus Motor, Getriebe und Sensor auf einfache Weise montiert werden. Außerdem kann der Sensor an besser zugänglichen Stellen vorgesehen werden.

Bevorzugt ist das Getriebe ein Planetengetriebe, dessen Ausgangselement ein Planetenträger ist. Derartige Getriebe sind kompakt und zuverlässig.

Das drehbare Sensorelement ist an dem Ausgangselement umfangsseitig angeordnet, um einen möglichst großen Radius aufzuweisen, wodurch sich die Drehzahl des Ausgangselements auf einfache Weise genau bestimmen lässt.

Gemäß der Erfindung ist ein Radlagerabschnitt zur Lagerung des mit dem Ausgangselement verbundenen Wellenabschnitts vorgesehen. Bei dieser Ausführungsform ist der Außenumfang des Ausgangselements größer als der Außenumfang des durch den Radlagerabschnitt drehbar gelagerten Wellenabschnitts. Insbesondere ist der Außenumfang des Ausgangselements auch größer als der jeweilige Außenumfang von weiteren mit dem Wellenabschnitt drehfest verbundenen Komponenten. Da die Drehzahl an dem Getriebe gemessen werden soll und nicht an einer Welle oder einem vergleichbaren Bauteil, greift man für die Drehzahlüberwachung auf ein dem Getriebe zugeordnetes Ausgangselement - das beispielsweise ein Planetenträger sein kann - zurück, das in der Regel einen größeren Außenumfang aufweist als ein Wellenabschnitt, mit dem das Ausgangsdrehmoment des Getriebes dem Rad zugeleitet wird.

Ferner kann vorgesehen sein, dass der Wellenabschnitt einstückig mit dem Ausgangselement ausgebildet ist. Eine zweiteilige Ausbildung ist jedoch auch möglich.

Das Getriebe ist in einem Gehäuse oder Gehäuseabschnitt angeordnet, das bzw. der mit einem Deckel verschließbar ist. Es hat sich als vorteilhaft erwiesen, wenn das drehfeste Sensorteil an dem Deckel angeordnet ist und sich insbesondere durch eine Öffnung des Deckels zumindest teilweise von außen in das Innere des Gehäuses erstreckt. Dies ermöglicht eine einfache Montage und Zugänglichkeit des Sensors.

Weitere Ausführungsformen der Erfindung sind in den Unteransprüchen, der Beschreibung und den beigefügten Zeichnungen angegeben.

Die vorliegende Erfindung wird im Folgenden rein beispielhaft anhand einer vorteilhaften Ausführungsform unter Bezugnahme auf die beigefügten Zeichnungen erläutert. Es zeigen:
- Fig. 1: einen Querschnitt durch eine Ausführungsform des erfindungsgemäßen Radnabenantriebs,
- Fig. 2: eine Perspektivansicht eines Planetengetriebes der in Fig. 1 gezeigten Ausführungsform des erfindungsgemäßen Radnabenantriebs.

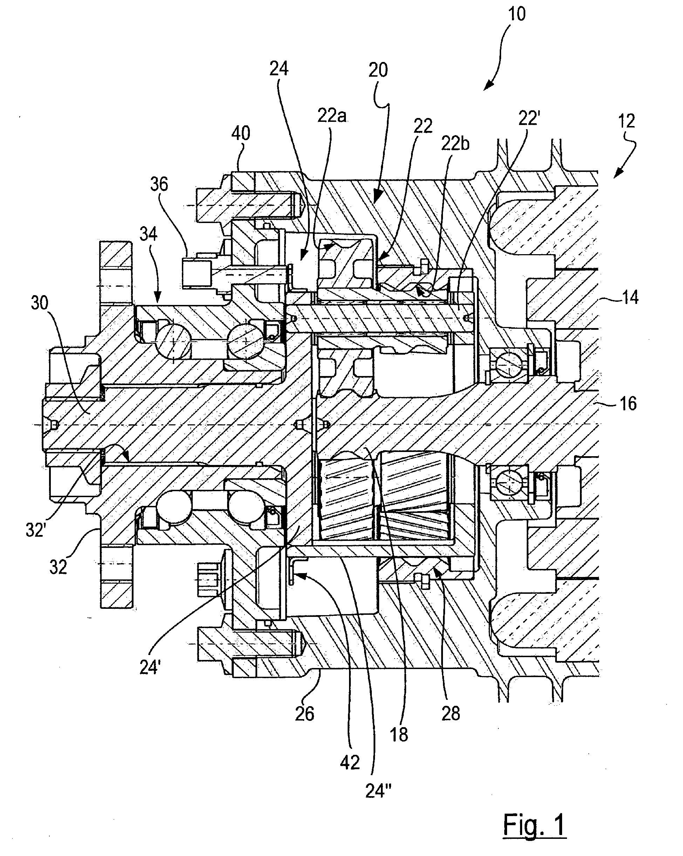

Fig. 1 zeigt einen Radnabenantrieb 10, der einen nur ansatzweise gezeigten und nicht näher beschriebenen Elektromotor 12 umfasst. Ein Rotor 14 des Elektromotors 12 ist mit einer Antriebswelle 16 drehfest verbunden. Die Antriebswelle 16 trägt ein Sonnenrad 18 eines Planetengetriebes 20, das wiederum mit einem Verzahnungsabschnitt 22a eines Stufenplaneten 22 kämmt. Der Verzahnungsabschnitt 22a ist drehfest mit einem weiteren Verzahnungsabschnitt 22b des Stufenplaneten 22 verbunden. Durch einen Antrieb des Stufenplaneten 22 durch das Sonnenrad 18 wird eine Rotationsbewegung eines den Stufenplaneten 22 tragenden Planetenträgers 24 erzeugt, da sich der Verzahnungsabschnitt 22b an einem mit einem Gehäuse 26 fest verbundenen Hohlrad 28 abwälzt.

Der Planetenträger 24 bildet das Ausgangselement des Planetengetriebes 20. Er umfasst eine Basis 24' und einen Käfig 24", der zur Lagerung einer den Stufenplaneten 22 tragenden Planetenachse 22' beiträgt. Die Basis 24' des Planetenträgers 24 ist einstückig mit einem Wellenabschnitt 30 ausgebildet, der wiederum mittels einer Verzahnung 32' mit einem Flansch 32 drehfest verbunden ist. Der Flansch 32 dient zur Befestigung einer Felge (nicht gezeigt) eines Rades eines Kraftfahrzeugs. Der Wellenabschnitt 30 und der mit ihm verbundene Flansch 32 werden von einem Radlager 34 drehbar gelagert.

Wie deutlich zu sehen ist, ist der Bauraum zwischen dem Flansch 32 und dem Planetengetriebe 20 sehr eng bemessen. Da zudem das Radlager 34 in diesem Bereich angeordnet ist, kann die Drehzahl des Wellenabschnitts 30 nicht auf einfache Weise bestimmt werden.

Daher ist ein Sensorelement 36 an einem Deckel 40 des Gehäuses 26 angeordnet. Er ragt durch eine Öffnung in dem Deckel 40 in das Innere eines das Planetengetriebe 20 aufnehmenden Abschnitts des Gehäuses 26. Dort misst er eine Rotationsgeschwindigkeit eines Geberrings 42, der an dem Planetenträger 24 umfangsseitig befestigt ist, beispielsweise durch Kleben oder Aufpressen. Aufgrund des im Vergleich zu dem Durchmesser des Wellenabschnitts 30 bzw. des Flansches 32 vergleichsweise großen Außendurchmessers des Planetenträgers 24 kann die Drehzahl auf einfache Weise exakt bestimmt werden.

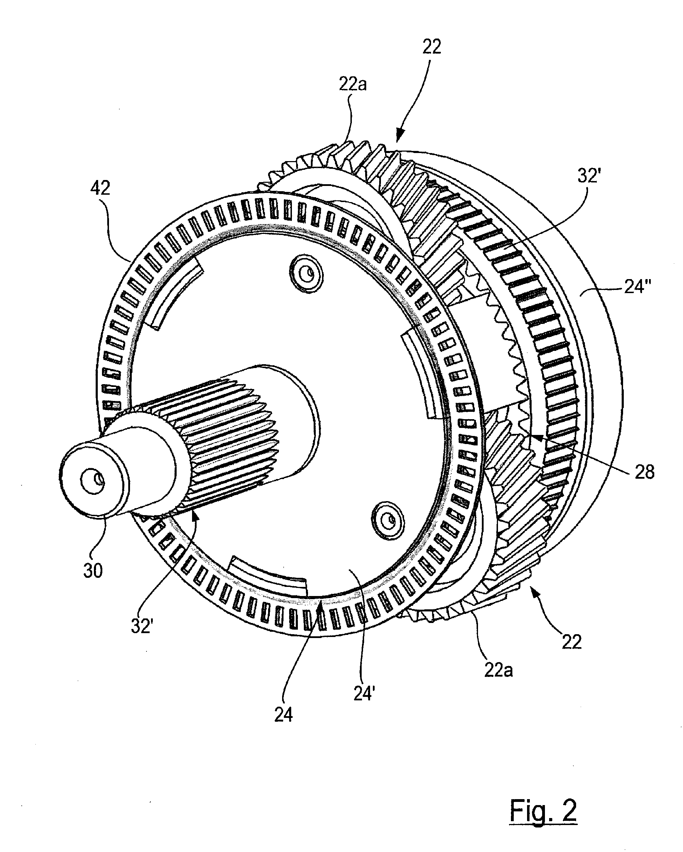

Fig. 2 zeigt eine Perspektivansicht des Planetengetriebes 20 des Radnabenantriebs 10. Es ist zu erkennen, dass drei Stufenplaneten 22 vorgesehen sind (nur zwei sind in dieser Ansicht zu sehen). Der Geberring 42 ist ein perforiertes Ringelement, das an dem Planetenträger 24 umfangsseitig und daher gut zugänglich befestigt ist. Funktionell dem Geberring 42 entsprechende Mittel können auch direkt an dem Planetenträger 24 ausgebildet sein. Ferner zeigt Fig. 2, dass das Hohlrad 28 umfangseitig eine Verzahnung 32' aufweist, die zur drehfesten Fixierung des Hohlrads 28 in dem Gehäuse 26 dient.

Es versteht sich, dass das Grundprinzip, die Drehgeschwindigkeit des Rades an einem Ausgangselement eines Getriebes zu messen, nicht auf Planetengetriebe beschränkt ist. Die Funktionsweise des Sensors ist ebenfalls frei wählbar (z.B. aktive/passive Bauweise), solange wenigstens ein drehbar gelagertes Sensorelement vorgesehen ist, das an dem Ausgangselement des Getriebes befestigt ist. Ferner versteht es sich, dass - im Gegensatz zu dem in den Fig. 1 und 2 dargestellten Aufbau - das Ausgangselement des Getriebes (hier der Planetenträger 24 bzw. Teile davon) nicht einstückig mit dem Wellenabschnitt 30 ausgebildet sein muss, um den der Erfindung zugrunde liegenden Gedanken zu realisieren.

Grundsätzlich ist es auch möglich, den Geberring 42 nicht im Bereich der Basis 24' des Planetenträgers 24 anzuordnen, sondern ihn beispielsweise am in Fig. 1 rechten Ende des Käfigs 24" zu platzieren. Das Sensorelement 36 müsste dann von oben oder unten an der entsprechenden Stelle durch die Umfangswand des Gehäuses 26 gesteckt werden, um mit dem Geberring 42 oder einem funktionell ähnlichen Element zusammenwirken zu können.

### Bezugszeichenliste

- 10: Radnabenantrieb
- 12: Elektromotor
- 14: Rotor
- 16: Antriebswelle
- 18: Sonnenrad
- 20: Planetengetriebe
- 22: Stufenplanet
- 22': Planetenachse
- 22a, 22b: Verzahnungsabschnitt
- 24: Planetenträger
- 24': Basis
- 24": Käfig
- 26: Gehäuse
- 28: Hohlrad
- 30: Wellenabschnitt
- 32: Flansch
- 32': Verzahnung
- 34: Radlager
- 36: Sensorelement
- 40: Deckel
- 42: Geberring

## Patentansprüche

1. Radnabenantrieb für ein Kraftfahrzeug, mit
einem Motor, insbesondere Elektromotor (12), der mit einem Eingangselement (18) eines Getriebes (20) antriebswirksam verbunden ist,
wobei das Getriebe (20) ein Ausgangselement (24) aufweist, das mit einem Wellenabschnitt (30) verbunden ist, durch den ein Rad des Kraftfahrzeugs antreibbar ist,
wobei ein Sensor zur Drehzahlüberwachung des Antriebs vorgesehen ist, der ein drehfest angeordnetes Sensorelement (36) und ein drehbares Sensorelement (42) umfasst,
wobei das drehbare Sensorelement (42) drehfest mit dem Ausgangselement (24) verbunden ist,
wobei das drehbare Sensorelement (42) an dem Ausgangselement (24) umfangsseitig angeordnet ist, dadurch **gekennzeichnet**, dass
ein Radlagerabschnitt (34) zur Lagerung des mit dem Ausgangselement (24) verbundenen Wellenabschnitts (30) vorgesehen ist, wobei der Außenumfang des Ausgangselements (24) größer ist als der Außenumfang des durch den Radlagerabschnitt (34) drehbar gelagerten Wellenabschnitts (30) und insbesondere größer als der jeweilige Außenumfang von weiteren mit dem Wellenabschnitt (30) drehfest verbundenen Komponenten (32), und wobei
das Getriebe (20) in einem Gehäuse (26) oder Gehäuseabschnitt angeordnet ist, das bzw. der mit einem Deckel (40) verschließbar ist, wobei das drehfeste Sensorelement (36) an dem Deckel (40) angeordnet ist und sich insbesondere durch eine Öffnung des Deckels (40) zumindest teilweise in das Innere des Gehäuses (26) erstreckt.

2. Radnabenantrieb nach Anspruch 1,
dadurch **gekennzeichnet,** dass
das Getriebe ein Planetengetriebe (20) ist und dass das Ausgangselement des Getriebes ein Planetenträger (24) ist.

3. Radnabenantrieb nach zumindest einem der vorstehenden Ansprüche,
dadurch **gekennzeichnet,** dass
der Wellenabschnitt (30) einstückig mit dem Ausgangselement (24) ausgebildet ist.

## Claims

1. Wheel hub drive for a motor vehicle, having a motor, in particular an electric motor (12), which is connected to an input element (18) of a transmission (20) so as to exercise a driving effect,
wherein the transmission (20) has an output element (24), which is connected to a shaft section (30), by means of which a wheel of the motor vehicle can be driven,
wherein a sensor is provided for monitoring the rotational speed of the drive, comprising a sensor element (36) arranged in a manner fixed against rotation and a rotatable sensor element (42), wherein the rotatable sensor element (42) is connected to the output element (24) for conjoint rotation,
wherein the rotatable sensor element (42) is arranged on the circumference of the output element (24),
**characterized in that**
a wheel bearing section (34) is provided to support the shaft section (30) connected to the output element (24), wherein the outer circumference of the output element (24) is larger than the outer circumference of the shaft section (30) rotatably supported by the wheel bearing section (34) and, in particular, is larger than the respective outer circumferences of further components (32) connected to the shaft section (30) for conjoint rotation, and wherein
the transmission (20) is arranged in a housing (26) or housing section which can be closed by means of a cover (40), wherein the sensor element (36) fixed against rotation is arranged on the cover (40) and, in particular, extends at least partially into the interior of the housing (26) through an opening in the cover (40).

2. Wheel hub drive according to claim 1,
**characterized in that**
the transmission is a planetary transmission (20) and **in that** the output element of the transmission is a planet carrier (24).

3. Wheel hub drive according to at least one of the preceding claims,
**characterized in that**
the shaft section (30) is formed integrally with the output element (24).

## Revendications

1. Entraînement de moyeu de roue pour un véhicule automobile, avec
un moteur, en particulier un moteur électrique (12), qui peut être relié en relation d'entraînement avec un élément d'entrée (18) d'une transmission (20),
dans lequel la transmission (20) présente un élément de sortie (24), qui est relié à une partie d'arbre (30), par laquelle une roue du véhicule automobile peut être entraînée,
dans lequel il est prévu un capteur pour la surveillance de la vitesse de rotation de l'entraînement, qui comprend un élément de capteur stationnaire (36) et un élément de capteur rotatif (42),
dans lequel l'élément de capteur rotatif (42) est solidaire de l'élément de sortie (24),
dans lequel l'élément de capteur rotatif (42) est disposé en périphérie sur l'élément de sortie (24), **caractérisé en ce qu'**il est prévu une partie de palier radial (34) pour supporter la partie d'arbre (30) reliée à l'élément de sortie (24), dans lequel le périmètre extérieur de l'élément de sortie (24) est plus grand que le périmètre extérieur de la partie d'arbre (30) supportée en rotation par la partie de palier radial (34) et est en particulier plus grand que le périmètre extérieur respectif d'autres composants (32) solidaires de la partie d'arbre (30), et dans lequel
la transmission (20) est disposée dans un boîtier (26) ou une partie de boîtier, qui peut être fermé (e) avec un couvercle (40),
dans lequel l'élément de capteur stationnaire (36) est disposé sur le couvercle (40) et s'étend au moins partiellement à l'intérieur du boîtier (26) en particulier à travers une ouverture du couvercle (40).

2. Entraînement de moyeu de roue selon la revendication 1, **caractérisé en ce que** la transmission est un engrenage planétaire (20) et **en ce que** l'élément de sortie de la transmission est une cage de transmission planétaire (24).

3. Entraînement de moyeu de roue selon au moins une des revendications précédentes, **caractérisé en ce que** la partie d'arbre (30) est réalisée en une seule pièce avec l'élément de sortie (24).
